# DEMANDE DE BREVET EUROPEEN

(11) **EP 0 837 614 A1**
(43) Date de publication de la demande: **22.04.1998**
(21) Numéro de dépôt: 97203101.7
(22) Date de dépôt: 07.10.1997
(51) Int. Cl.: H04Q 7/32

(54) **Système de transmission radioélectrique comportant des mobiles de télécommunications, procédé pour se connecter sur un tel système et mobile dans lequel ledit procédé est appliqué**

(30) Priorité: 16.10.1996 FR 9612629
(71) Demandeur: PHILIPS ELECTRONICS N.V., 5621 BA Eindhoven (NL)
(72) Inventeur: Coutant, François, 75008 Paris (FR)
(74) Mandataire: Chaffraix, Jean

(57) **Abrégé**

Ce système comporte une première station de base B1 qui a une zone de couverture Z1. Des mobiles M1 et M2 sont reliés à ce système. L'un au moins des mobiles de ce système comporte des moyens pour se connecter à un autre système, par exemple, le système ayant une base B2 présentant une zone de couverture Z2 plus ou moins commune avec la zone Z1. Le choix du système, au gré de l'utilisateur, est basé sur une statistique de temps portant sur la possibilité de se raccorder sur un autre système.

Application : radio cellulaire.

## Description

L'invention concerne un système de transmission radioélectrique auquel est rattaché au moins un mobile de télécommunications pour un abonné appelé à se déplacer dans des zones de couverture appartenant au système de rattachement et dans des zones appartenant à d'autres systèmes, mobile comportant :
- des moyens de connexion sur un autre système,
- des moyens d'analyse pour fournir des informations de transmission relatives à d'autres systèmes comportant des moyens de détections de systèmes,
- des moyens de communications de résultats de transmission pour communiquer à l'abonné le résultat des analyses de transmission.

L'invention concerne aussi un procédé mis en application dans un mobile et aussi un mobile dans lequel le procédé est mis en oeuvre.

Un tel système peut être un système de type GSM qui offre la possibilité pour un abonné possédant un tel mobile de se connecter sur un autre système que celui pour lequel il est initialement rattaché par abonnement. Cette possibilité est connue, selon la nomenclature G.S.M., sous le nom de "roaming". On pourra à ce sujet consulter notamment l'ouvrage : "The GSM System for Mobile Communication" de Michel MOULY et Marie-Bernadette PAUTET publié par les auteurs dont l'adresse est 4 rue Elysée Reclus. F-91120 FRANCE.

Le problème avec lequel l'abonné est confronté, est celui de déterminer, même en dehors de la procédure de "roaming", un autre système qui lui convient, et auprès duquel il pourrait prendre un abonnement. Bien que l'abonné ait déjà un système de rattachement initial, il peut être tenté de se connecter sur un autre système qui lui conviendrait mieux, par exemple, il pourrait choisir un système qui offre un abonnement moins coûteux. Cependant, il ne doit pas oublier que ce système meilleur marché doit avoir une couverture suffisamment importante pour satisfaire ses besoins de communications lorsqu'il se déplace.

La présente invention propose un système du genre mentionné dans le préambule qui procure à l'abonné des indications qui lui permettent de se raccorder au système en connaissance de cause.

Pour cela, un tel système est remarquable en ce qu'il comporte des moyens de chronométrage affectés chacun à un système détecté par lesdits moyens de détection.

Ainsi, grâce à l'invention, l'utilisateur dispose de statistiques concernant la durée d'accessibilité de chaque système avec lesquels il peut trafiquer.

La description suivante, faite en regard des dessins ci-annexés, le tout donné à titre d'exemple non limitatif, fera bien comprendre comment l'invention peut être réalisée.
La figure 1 montre un système conforme à l'invention.
La figure 2 montre un mobile de télécommunication conforme à l'invention.
La figure 3 montre la structure du montage électrique compris dans ledit mobile.
La figure 4 montre un premier organigramme de fonctionnement d'une station mobile conforme à l'invention.
La figure 5 montre un deuxième organigramme de fonctionnement d'une station mobile conforme à l'invention.
La figure 6 montre l'organigramme qui permet d'incrémenter les compteurs de temps.

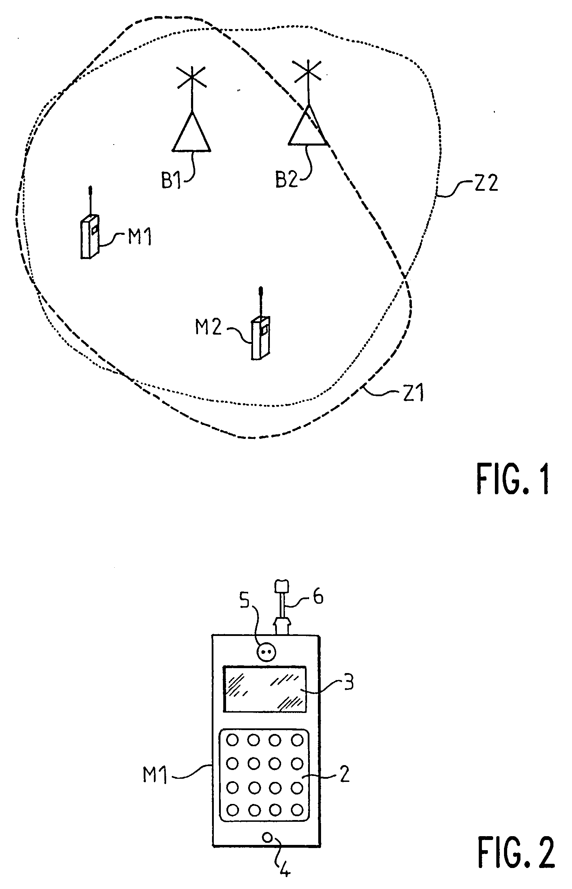

A la figure 1, on a représenté schématiquement un premier système (ou réseau) de transmission de type GSM. On rappelle que ce système est un système cellulaire qui implique une couverture formée de cellules. Chaque cellule a un plan de fréquences ou un canal de fréquence qui se répète toutes les sept cellules pour des cellules de forme hexagonale. Sur la figure 1, le système représenté est formé notamment d'une station de base B1 servant d'intermédiaire pour toutes communications dans lesquelles au moins l'une de deux stations mobiles est concernée : M1 ou M2. Ces stations mobiles M1 et M2 sont situées dans la zone de couverture Z1 de la station de base B1. Cette zone est délimitée sur la figure 1 par un trait en pointillé Z1. Comme cela arrive souvent en pratique, les mobiles peuvent se trouver dans des zones de couvertures appartenant à des réseaux pour lesquels ils n'ont pas pris d'abonnement. Par exemple, comme cela est montré sur la figure, les mobiles M1 et M2 sont aussi situés dans la zone de couverture Z2 d'une autre station de base B2 d'un système différent de celui de la station B1 et qui pourrait aussi donner satisfaction à l'utilisateur.

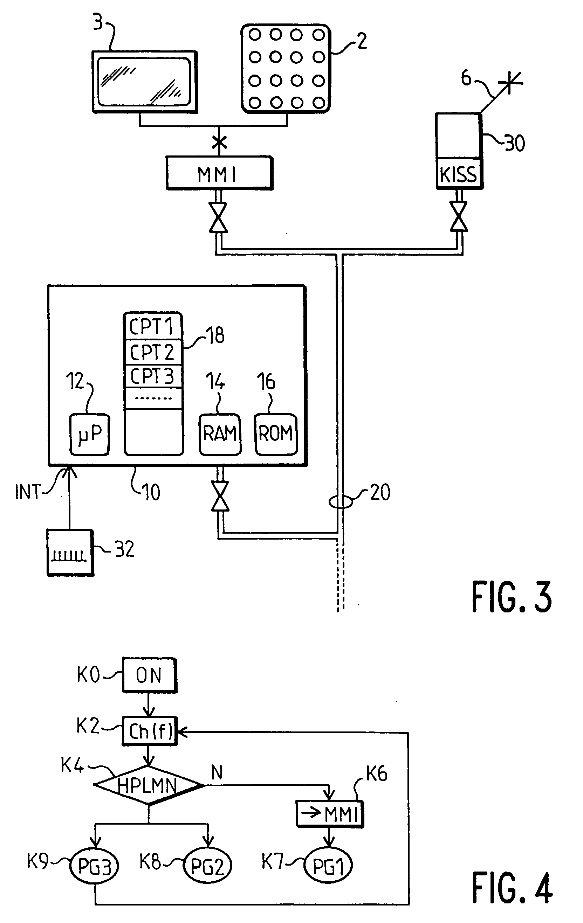

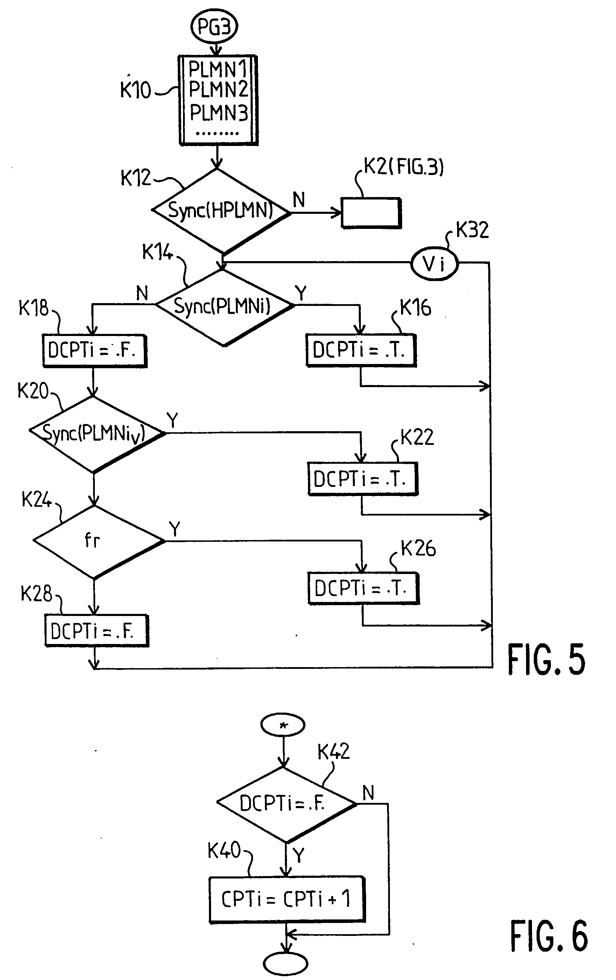

A la figure 2, on a représenté la station mobile M1 conforme à l'invention. Elle comporte, comme à l'accoutumée, un clavier 2, un écran 3, un microphone 4, un écouteur 5 et une antenne 6. Cette station fonctionne à l'aide d'un montage électrique qui est montré à la figure 3.

Cette figure 3 montre la structure du montage électrique de la station mobile M1. Ce montage est constitué par un ensemble à microprocesseur 10 constitué par un microprocesseur proprement dit 12, par une mémoire vive 14, par une mémoire ROM 16 et par une mémoire de type EEPROM 18 qui permet de stocker et de conserver des données, même le poste éteint. Les données traitées ou à traiter par cet ensemble 10 transitent par une ligne commune de données 20 qui est connectée au clavier 2 et à l'écran 3 par l'intermédiaire d'un circuit d'interface homme-machine MMI et qui est connectée aussi, entre autres, au circuit émetteur-récepteur 30 par l'intermédiaire d'un circuit d'interface de commande radio KISS.

Conformément à l'invention, il est prévu dans la mémoire 18, des emplacements CPT1, CPT2, CPT3,... qui sont utilisés pour fournir des indications, sur la durée pendant laquelle on aurait pu se connecter sur un réseau autre que celui pour lequel l'utilisateur est abonné. Ces mémoires CPT1, CPT2, CPT3,... lorsque cela est autorisé, sont incrémentées au rythme d'une horloge 32 qui fournit des signaux sur une entrée d'interruption INT, de sorte qu'un programme d'interruption est exécuté pour les incrémenter ou non.

La figure 4 montre l'organigramme de fonctionnement de la station mobile, conformément à l'invention.

Cet organigramme comporte une case K0 qui indique le démarrage de la station.

Selon le fonctionnement habituel d'une station mobile GSM, le circuit d'interface KISS oeuvre, comme l'indique la case K2, pour rechercher les canaux (en fréquences) en analysant leur niveau. On retient les canaux ayant un niveau suffisant. On essaye ensuite à la case K4, de se connecter sur le réseau auquel on est abonné : HPLMN. Si l'on n'y arrive pas, on envoie un message à l'interface MMI pour signaler ce fait, case K6. On passe ensuite à la case K7 qui indique le déroulement d'un programme d'attente PG1.

Si l'on arrive à se connecter sur le réseau auquel l'utilisateur est abonné, deux programmes PG2 (case K8) et PG3 (case K9) vont s'exécuter en parallèle. Le programme PG2 est le programme qui gère la communication et autres fonctions habituelles de la station mobile. Ce programme n'étant pas concerné par l'invention, il ne sera pas décrit en détail. Le programme PG3 est expliqué à l'aide de l'organigramme montré à la figure 5.

La case K10 désigne l'opération qui consiste à déterminer les autres réseaux PLMN avec lesquels il est posssible de trafiquer. Il est donc créé une liste de ces PLMN. L'opération suivante indiquée à la case K12 est l'opération par laquelle on vérifie si la synchronisation sur le réseau auprès duquel on a pris un abonnement (HPLMN) est toujours effective. Puis, on cherche ou on vérifie la synchronisation sur "la meilleure cellule" de chaque PLMN, c'est-à-dire sur le canal de fréquence le mieux reçu (case K14). Si l'on est synchronisé, ou si l'on arrive à se synchroniser, un compteur de temps pour chronométrage, relatif au PLMN est autorisé à s'incrémenter. Pour cela, on met un drapeau DCPTi relatif au PLMNi traité en position .T. (case K16). Sinon, le contenu de ce compteur est figé. Le drapeau est mis en position .F. (case K18). Puis à la case K20, qui suit la perte de synchronisation détectée à la case K14, on effectue une opération de synchronisation sur le même PLMN mais dans une cellule voisine, dont les fréquences sont connues puisque transmises lors d'une précédente synchronisation. Si, finalement, on obtient cette dernière synchronisation, alors le compteur affecté à ce PLMN est autorisé à s'incrémenter (case K22). Si l'on n'obtient pas cette dernière synchronisation, sur une cellule voisine, on effectue alors une recherche sur tout le spectre des canaux fréquentiels (case K24). Cette recherche est poursuivie, soit jusqu'à ce que l'on trouve le PLMN en question, alors le compteur affecté toujours à ce même PLMN est autorisé à s'incrémenter (case K26), soit alors jusqu'à ce que l'on ait décidé que la recherche de ce PLMN est infructueuse et alors, le contenu du compteur affecté à ce PLMN est figé (case K28). Le traitement qui est décrit depuis la case K14 est effectué pour les PLMNi contenus dans la table établie à la case K10. Ceci est indiqué par la case K32.

Le programme de la figure 5 se déroule d'une manière continue, en parallèle avec d'autres programmes de fonctionnement de la station mobile.

La figure 6 montre l'organigrame qui explique la manière dont les compteurs de chronométrage CPTi sont incrémentés ou non (case 40), en fonction de la valeur des drapeaux qui leur sont associés DCPTi (case K42).

En manoeuvrant son clavier, l'utilisateur peut retrouver le contenu de ces compteurs avec, en regard, le nom du réseau PLMN, ce qui lui donne une statistique des réseaux sur lesquels il est susceptible de se connecter. Et de là, il a le choix de s'abonner auprès d'un autre opérateur sachant que celui-ci peut lui procurer un bon service.

Sur l'écran, on verrait :
- le temps total pendant lequel la station mobile est en marche,
- le temps total pour chaque PLMN trouvé,
- la remise à zéro de ces compteurs,
- le résultat en pourcentage.

Un avantage apporté par l'invention est que l'utilisateur se trouvant à l'étranger sera aidé, lors de la procédure du "Roaming", pour sélectionner automatiquement le réseau qui a le plus de chance d'être présent le plus longtemps.

L'utilisateur peut aussi, grâce aux mesures préconisées par l'invention, tenir à jour une liste de PLMN préférentiels.

## Revendications

1. Système de transmission radioélectrique auquel est rattaché au moins un mobile de télécommunications pour un abonné appelé à se déplacer dans des zones de couverture appartenant au système de rattachement et dans des zones appartenant à d'autres systèmes, mobile comportant :
- des moyens de connexion sur un autre système,
- des moyens d'analyse pour fournir des informations de transmission relatives à d'autres systèmes, comportant des moyens de détections de systèmes,
- des moyens de comunications de résultats de transmission pour communiquer à l'abonné le résultat des analyses de transmission,
système caractérisé en ce qu'il comporte des moyens de chronométrage affectés chacun à un système détecté par lesdits moyens de détection.

2. Procédé mis en oeuvre dans un mobile de télécommunications rattaché à un système selon la revendication 1, caractérisé en ce qu'il comporte les étapes suivantes :
- détections des sytèmes reçus,
- analyse des signaux des systèmes reçus pour fournir un signal d'autorisation,
- affectation d'un compteur de chronométrage à chacun des systèmes reçus,
- incrémentation d'un compteur pour un système reçu en dépendance dudit signal d'autorisation.

3. Procédé selon la revendication 2, pour lequel les systèmes fournissent leurs informations selon une pluralité de canaux, caractérisé en ce que le procédé comporte en outre les étapes suivantes :
- détection de synchronisation sur un canal le mieux reçu,
- recherche d'un autre canal en cas de perte de détection détectée par l'étape précédente,
- analyse des signaux reçus si le système est synchronisé, pour fournir ledit signal d'autorisation,
- incrémentation d'un compteur pour un système reçu en dépendance dudit signal d'autorisation.

4. Mobile dans lequel est mis en oeuvre le procédé selon l'une des revendications 2 à 3, caractérisé en ce qu'il comporte :
- des moyens de connexion sur un autre système,
- des moyens d'analyse pour fournir des informations de transmission relatives à d'autres systèmes comportant des moyens de détections de systèmes,
- des moyens de communications de résultats de transmission pour communiquer à l'abonné le résultat des analyses de transmission,
- des moyens de chronométrages affectés chacun à un système dé tecté par lesdits moyens de détection.
